# EUROPÄISCHE PATENTSCHRIFT

(11) **EP 2 493 715 B1**
(45) Veröffentlichungstag und Bekanntmachung des Hinweises auf die Patenterteilung: **12.03.2014**
(21) Anmeldenummer: 10773897.3
(22) Anmeldetag: 28.10.2010
(51) Int. Cl.: B60K 6/10, F02B 71/04, B60K 6/46, B60K 6/52, B60K 6/543, B60K 6/12

(54) **ELEKTRO-HYDRAULISCHER FAHRANTRIEB**
ELECTRO-HYDRAULIC TRACTION DRIVE
GROUPE MOTOPROPULSEUR ÉLECTROHYDRAULIQUE

(30) Priorität: 29.10.2009 DE 102009051204
(43) Veröffentlichungstag der Anmeldung: 05.09.2012
(73) Patentinhaber: Muller, Katherina, 80333 München (DE)
(72) Erfinder: MULLER, Willem J. M., 82256 Fürstenfeldbruck (DE)
(74) Vertreter: Vogeser, Werner
(86) Internationale Anmeldenummer: PCT/EP2010/066293
(87) Internationale Veröffentlichungsnummer: WO 2011/051360

(56) Entgegenhaltungen:
- EP-A1- 2 065 282
- WO-A1-98/54450
- WO-A1-2009/060091
- DE-A1- 3 029 287
- DE-A1- 19 745 810
- US-A1- 2005 167 178

## Beschreibung

### I. Anwendungsgebiet

Die Erfindung betrifft einen Antrieb für Kraftfahrzeuge, insbesondere Personenkraftfahrzeuge und leichte Nutzkraftfahrzeuge.

### II. Technischer Hintergrund

Die Ära des Erdöls als tragende Energiequelle der Automobilität geht zu Ende. Zu gleicher Zeit stößt die Verbrennung fossiler Kraftstoffe wegen negativer Umwelteffekte zunehmend auf Widerstand. Man arbeitet daher weltweit an sparsamen Verbrennungsmotoren, schadstoffarmen Elektroantrieben und an der Erzeugung von Kraftstoffen resp. Strom aus umweltfreundlichen Ressourcen.

Eine Schlüsselrolle spielt der Elektroantrieb. Wegen Schwierigkeiten mit den Batterien wird es aber noch einige Zeit dauern, bevor ihm der Durchbruch am Massenmarkt gelingen wird. Bis dahin muss er mit Verbrennungsmotoren zusammen arbeiten. Man spricht von elektrischen Hybridantrieben.

Aber auch wenn die Batterien klein, leicht und preisgünstig geworden sind, ihre Ladung nicht mehr schwankt und die Überhitzungsgefahr gebannt ist, werden dem Elektroantrieb drei Negativpunkte bleiben:
1. Die Wiederverwendung der ganzen Bremsenergie - immerhin das Hauptpotential der Verbrauchsreduzierung - braucht zusätzlich entweder teure Hochleistungsbatterien oder einen nicht weniger teuren kinetischen Speicher.
2. Externe Aufladung der Batterie kostet viel Standzeit, während ein Verbrennungsmotor dies im laufenden Betrieb bei diskutablem Aufwand bietet.
3. Solange der Strom aus fossilen Ressourcen erzeugt wird, sei es vom Kraftwerk oder vom Verbrennungsmotor, sind Verbrauch und Umweltbelastung bei elektrischen Antrieben größer als bei nicht-elektrischen Antrieben.

In diesem Zusammenhang ist bereits ein elektro-hydraulischer Kraftfahrzeug-Antrieb aus der DE 197 45 810 A1 bekannt mit einem Freikolben-Verbrennungsmotor, der hydraulische Energie in Form von Hydraulikenergie unter Hochdruck erzeugt und in einem Hochdruckspeicher speichert und einen Hydraulikmotor zum Antrieb des Fahrzeuges aufweist. Der HochdruckAuslass des Hydraulikmotors ist mit dem Hochdruckspeicher über ein Rückschlagventil verbunden. Zusätzlich ist auch ein Niederdruckspeicher vorhanden.

### III. Darstellung der Erfindung

### a) Technische Aufgabe

Es ist dabei die Aufgabe gemäß der Erfindung, die erwähnten Nachteile zu vermeiden.

### b) Lösung der Aufgabe

Vor diesem Hintergrund schlägt die Erfindung als Alternative einen elektrohydraulischen Antrieb vor, bestehend aus:
A. Freikolben-Verbrennungsmotor,
   der die chemische Energie des Kraftstoffs in hydraulische Energie verwandelt, indem er Öl unter Hochdruck in einen Hochdruckspeicher pumpt, von wo aus ein hydraulischer Antrieb, ein elektrischer Antrieb oder beide Antriebe gleichzeitig es entnehmen können. Er arbeitet immer im oder zumindest nah am Betriebsoptimum, und immer nur, wenn der Druck im Hochdruckspeicher unter einen bestimmten Wert sinkt. Wenn im Hochdruckspeicher mehr zusätzliches Hydrauliköl aufgenommen werden kann als ein Arbeitshub des Freikolbenmotors in den Hochdruckspeicher hineinpumpt, wird der Freikolbenmotor aktiviert und leistet mindestens einen Arbeitshub.
B. Hydraulikantrieb,
   aus Drucktransformator und Hydrokonstantmotor(en) zum Achs- oder Radantrieb, verbunden mit einem nachgeschalteten mechanischen Getriebe, insbesondere Planetengetriebe, das interaktiv mit dem Drucktransformator schaltet.
C. Elektroantrieb, aus hydraulisch angetriebenem Generator, einer davon versorgten Batterie, Steuereinheit und Elektromotor(en) für die nicht-hydraulisch angetriebenen Achsen oder Räder. Die Batterie wird vom Freikolbenmotor über den Hochdruckspeicher und einen Hydraulikmotor geladen und kann, über eine zusätzliche Vorkehrung, auch extern geladen werden. Sie ist jedoch nicht ausgelegt für Aufnahme hoher Leistungsspitzen, und die Motoren nicht für deren Abnahme.

### Besonderheiten:

- Der eine Antrieb ist nicht der Assistent des anderen, sondern beide sind vollwertige Antriebe, die wahlweise eingesetzt werden können.
- Beide beziehen Energie vom Freikolbenmotor - jeweils über einen Speicher, wobei der elektrische Speicher (Batterie) für Energiedichte, der hydraulische Hochdruckspeicher für Leistungsdichte ausgelegt ist.
- Beide verfügen über ein stufenlos variables Drehmoment mit enormer Spreizung, das beim Hydraulikantrieb vom Drucktransformator, ggf. in Interaktion mit dem Planetengetriebe, realisiert wird.
- Beiden Antrieben steht auf Anhieb das maximale Drehmoment zur Verfügung.
- Der Bewegungsvorgang im Freikolbenmotor läuft im Wesentlichen immer, also frequenzunabhängig, optimiert ab. Dadurch können die Möglichkeiten der Einspritz- und Verdichtungssteuerung großenteils zum Beispiel zur Berücksichtigung der Unterschiede verschiedener Kraftstoffe genützt werden.

### VORTEILE

- Leichter Verbrennungsmotor,
   da der Hydraulikantrieb schon bei niedriger Geschwindigkeit hohe Drehmomente auf die Räder bringt und andererseits hohe Geschwindigkeiten fahren kann, zusätzlich die Unterstützung des Elektroantriebs verfügbar ist und wegen des hohen Wirkungsgrades eines solchen Freikolbenmotors.
- Leichte Elektromotoren; kleine Batterie:
   Die Elektromotoren sind zum Mitschwimmen im städtischen Verkehr ausgelegt, wodurch eine vergleichsweise kleine Batterie den urbanen Mobilitätsbedarf weitreichend abdeckt.
- Externe Aufladung der Batterie eher Ausnahme,
   da die Batterie vorwiegend im hydraulischen Fahrbetrieb aufgeladen wird.
- elektrischer Hochleistungsspeicher überflüssig,
   da Leistungsspitzen der Bremsenergie hydraulisch abgenommen, gespeichert und wiederverwendet werden.
- Geringer Verbrauch,
   da beide Antriebsmodi von der Effizienz in etwa gleich sind und der Freikolben-Verbrennungsmotor einen überlegenen Wirkungsgrad hat.
   - Vorbereitet auf Eventualitäten,
      sei es Sperrung von Innenstädten für Verbrennungsmotoren, explodierende Kraftstoffpreise oder lückenhafte Versorgung: Der erfindungsgemäße Antrieb kann über weite Strecken elektrisch fahren sowie jederzeit umsteigen von fossilem auf regenerativen Kraftstoff.
   - Kostengünstig.
      Alle Komponenten sind wesentlich kostengünstiger herzustellen als Komponenten heutiger Hybridantriebe.
   - kleiner und leichter Hochdruckspeicher:
      da dieser lediglich als kleiner Puffer bei vollständigem Stillstand des Freikolbenmotors dient und entweder nur soviel Öl enthält als für den Neustart nötig ist, oder - wenn er auch als Bremsenergiespeicher dient - entsprechend mehr.

### Kurzbeschreibung der Figuren

Figuren 1 und 2 zeigen schematisch den elektro-hydraulischen Kraftfahrzeug-Antrieb anhand zweier Auslegungen.
Figur 3 stellt einen zweifach wirkenden Dual-Freikolbenmotor dar, wobei der Verbrennungsteil als "Stelzermotor" ausgeführt ist.
Figur 4 zeigt eine Selbstzündervariante eines doppelt wirkenden Freikolbenmotors.
Figuren 5a und 5b zeigen eine Radialkolbenmaschine.

### BESCHREIBUNG

Da Hydrokonstantmotoren und Elektroantriebe in vielerlei Ausführungen bekannt sind, beschränkt sich die Beschreibung auf Freikolbenmotor und Drucktransformator sowie auf den Nachweis, dass die einzelnen Komponenten und der erfindungsgemäße elektro-hydraulische Antrieb insgesamt praxisgerecht funktionieren.

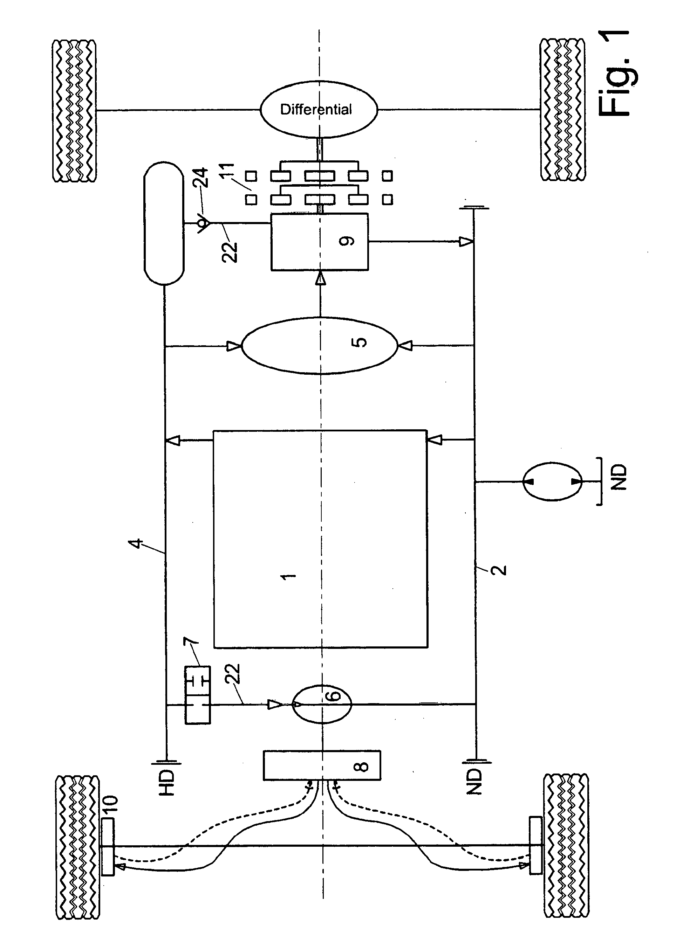

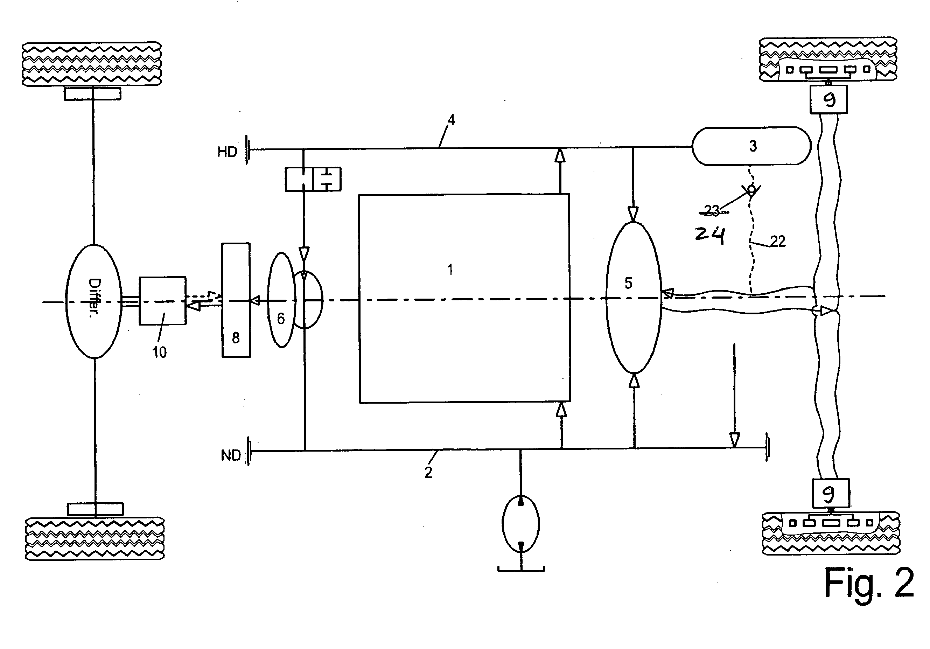

Die Figuren 1 und 2 zeigen schematisch die drei Teile und ihre Hauptkomponenten in Zusammenhang anhand zweier exemplarischer Auslegungen:

Der Freikolbenverbrennungsmotor 1 saugt Niederdrucköl 2 an und presst es mit Hochdruck in einen Hochdruckspeicher 3 z. B. über eine Hochdruckleitung 4, von wo aus es von Verbrauchern entnommen werden kann:

Der Hydraulikantrieb benützt dazu einen Drucktransformator 5, der den Druck dem sich ständig ändernden Bedarfsdruck des Hydraulikmotors des Hydraulikantriebes anpasst. Für eventuelle hydraulische Nebenfunktionen (Lenken, Bremsen, Kühlen, Generatorantrieb) kann es einen anderen Druck-Transformator (nicht gezeichnet) geben, der den Druck auf niedrigeres Konstantniveau bringt.

Der Elektroantrieb bedient sich über einen hydraulisch betriebenen Generator 6 aus dem Hochdruckspeicher 3, wenn der Hydraulikantrieb die Leistung des Freikolbenmotors nicht vollständig benötigt, indem er durch Freischaltung des ON/OFF-Ventils 7 die vom Hydroantrieb nicht genützte Leistung verwendet, um hydraulische Energie in elektrische umzuwandeln und zu speichern.

Die Räder werden angetrieben von einem oder mehr Hydraulikkonstantmotoren (z. B. hinten) und von einem oder mehr Elektromotoren 10 (z. B. vorne) an der Achse bzw. den einzelnen Rädern. Der Hydraulikmotor bekommt Drucköl vom Drucktransformator 5, der interaktiv mit dem Ein- oder Zweisatz-Planetengetriebe 11 schaltet. Das Produkt des Drucktransformationsbereiches und des mechanischen Übersetzungsbereich ergibt für das Raddrehmoment einen riesigen Spreizungsbereich.

Die Lösungen der Figuren 1 und 2 zeigen exemplarisch die Realisierungsmöglichkeiten, welche mit den Varianten der verschiedenen Komponenten verbunden sind:
- ein- oder zweifach wirkender Freikolbenmotor;
- Achs- oder Einzelradantrieb;
- mechanisches oder hydraulisches Differential;
- ein- oder zweisätziges Planetengetriebe;
- Bremsenergiespeicherung im Hochdruckspeicher oder in einem separaten Bremsenergiespeicher.

Sie haben keine normative Bedeutung und es benötigt hier lediglich die Erläuterung, dass die Elektromotoren beim Bremsen die mechanische Bremsenergie zum Speichern in elektrische Energie umwandeln und dazu automatisch in den Generatorbetrieb schalten, und ebenso die Hydraulikmotoren die mechanische Bremsenergie in hydraulische Energie umwandeln und speichern, wozu sie ebenfalls automatisch in den Pumpenbetrieb schalten. Die Transportwege der Bremsenergien werden von den unterbrochenen Linien dargestellt.

Die Lösungen der Figuren 1 und 2 unterscheiden sich hinsichtlich der Anordnung der konkreten Antriebsmotoren zu den Rädern:
In Fig. 1 werden die Räder der Hinterachse zentral und daher über ein Differenzial von dem beschriebenen Hydraulikantrieb, bestehend aus Hydraulikmotor und Planetengetriebe, angetrieben.

Die Vorderräder werden dagegen einzeln von Elektromotoren angetrieben.

Im Gegensatz dazu zeigt Fig. 2 eine Lösung, bei der die Räder einer Achse, z. B. Hinterachse oder Vorderachse, gemeinsam über ein Differenzial von einem gemeinsamen Elektromotor 10 angetrieben werden, während an der anderen Achse, beispielsweise der Vorderachse, an jedem Rad ein eigener Hydraulikmotor 9, mit oder ohne Planetengetriebe 11, sitzt, die beide vom gleichen Drucktransformator 5 mit Hochdrucköl versorgt werden.

Beim Bremsen können die Elektromotoren die mechanische Bremsenergie in elektrische Energie umwandeln und schalten dazu automatisch in den Generatorbetrieb, und ebenso kann der jeweilige Hydraulikantrieb die mechanische Bremsenergie in hydraulische Energie umwandeln und im Hochdruckspeicher einbringen, wozu der Hydraulikantrieb, insbesondere der Hydraulikmotor, ebenfalls automatisch in den Pumpenbetrieb schaltet.

### FREI KOLBENMOTOR

Beim Freikolbenmotor bewegt sich ein Kolben in einem beidseits geschlossenen Zylinder hin und her, wodurch auf den beiden Seiten des Freikolbens je ein Arbeitsraum gebildet wird. in dem ein zündfähiges Kraftstoff-LuftGemisch zur Explosion gebracht wird und expandiert und die Kolben antreibt, während der andere Arbeitsraum mit Niederdrucköl gefüllt wird, das mittels des durch die Expansion der Brenngase verschobenen Kolbens unter hohen Druck gesetzt und in einen Hochdruckspeicher abgeführt wird.

Am Ende jeder Expansionsbewegung kommt der Kolben am unteren Totpunkt zum Stehen - und bleibt dort, bis Beaufschlagung mit ND-Öl einen neuen Puls auslöst.

Die Leistungssteuerung basiert auf Puls-Pause-Modulation: Nach jedem Arbeitsschub (Puls) wird eine bedarfsabhängige Pause eingelegt.

Es gibt schon über Jahre hinweg Konzepte solcher Freikolbenmotoren. Obwohl sie alle theoretisch sehr vorteilhaft sind, ist jedoch keines davon zur kommerziellen Fertigung gekommen. Der wichtigste Erklärungsgrund ist ihre beschränkte Variabilität gegenüber dem variablen Leistungsbedarf. Voraussetzung ihrer Vorzüglichkeit ist nämlich, dass der Bewegungsablauf der Pulse immer nahezu gleich und optimal ist. Wenn der Verbraucher aber zum Beispiel nur 10% der motorischen Höchstleistung benötigt, sollte nach jedem Puls über die Dauer von neun Pulsen Pause eingelegt werden. Mit der Dauer werden sich aber Umgebungsfaktoren ändern, was den Bewegungsablauf beeinflusst und wodurch die Pulse zunehmend suboptimal werden.

Bei dem vorgeschlagenen Antrieb benötigt der Freikolbenmotor - bedingt vom Vermögensverhältnis zwischen dem Hydraulik- und dem Elektroantrieb - nur eine geringe Variabilität. Ist das Verhältnis zum Beispiel 3: 1, so werden die Pausen nicht länger als zwei Pulse dauern.

Auch die relativ geringe Höchstleistung eines einfach wirkenden Freikolbenmotors spielt hier eine Rolle, während zweifach wirkende Freikolbenmotoren zusätzliche Schwierigkeiten mit sich bringen: Bei der so genannten "opposed version" die Synchronisierung der beiden Kolbenbewegungen, bei der "dual version" die Leistungssteuerung, da Expansionsphase an der einen Seite des Kolbens zugleich Kompressionsphase an der anderen Seite ist und der eine Puls somit den nächsten nach sich zieht.

Auch hier bietet der vorgeschlagene Antrieb nun eine Lösung: Einen zweifach wirkenden Dual-Freikolbenmotor, wobei das Verbrennungsteil 12 als "Stelzermotor" (z. B. gemäß DE 3029287) ausgeführt ist.

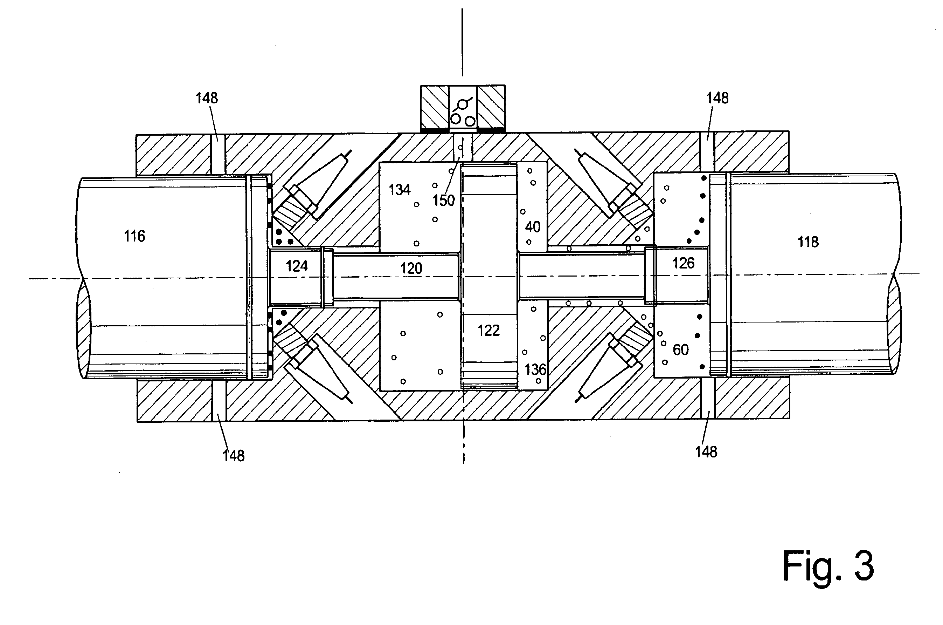

Ein Stelzermotor (Figur 3) - als beidseitig wirkender Freikolbenmotor - umfasst einen symmetrischen, frei fliegenden Kolben, dessen beide Enden jeweils als Stufenkolben ausgebildet sind. Der Kolbenteil 116, 118 mit dem größeren Durchmesser ist die axiale äußere Begrenzung eines sich zur Mitte des Stelzermotors hin anschließenden Expansionsraumes 66 für ein zu zündendes Gasgemisch, in dessen Seitenwand sich Spülkanäle 48 befinden, die mit der Umgebung in Verbindung stehen.

Der Kolbenmittelteil 120 weist eine Verdickung 122 auf, die in einem Vorverdichterraum 34 sich axial hin und herbewegt, und welcher in der Mitte ebenfalls einen Lufteinlass und -auslass 50 besitzt.

Der Kolbenteil 124, 126 mit dem geringeren Durchmesser des Stufenkolbens gleitet abdichtend in der Verbindungsbohrung zwischen dem Vorverdichterraum und dem Expansionsraum hin und her und gibt je nach Stellung eine Verbindung zwischen beiden frei. Auf diese Art und Weise wird durch den verdickten Mittelteil 122 des Kolbenmittelteiles 120 bereits während des Expandierens der Brenngase am Ende der Expansionsbewegung die Spülung des Expansionsraumes durch die Luft aus dem Vorverdichterraum verbessert.

Allerdings zieht hier ein Antriebshub ohne Pause den nächsten nach sich, bis die Zündung ausbleibt und der Motor stoppt. Die Leistung ist daher nur steuerbar durch das Aussetzen entweder der Zündung oder der Einspritzung. Nach Wiederherstellung der Verdichtung (zum Beispiel mit einem Permanentmagnet) muss man den Motor immer wieder neu starten, oder - bei Selbstzündern - durch die Einspritzmenge variieren, was sich allerdings äußerst negativ auf Verbrauch und Verbrennungsqualität auswirkt.

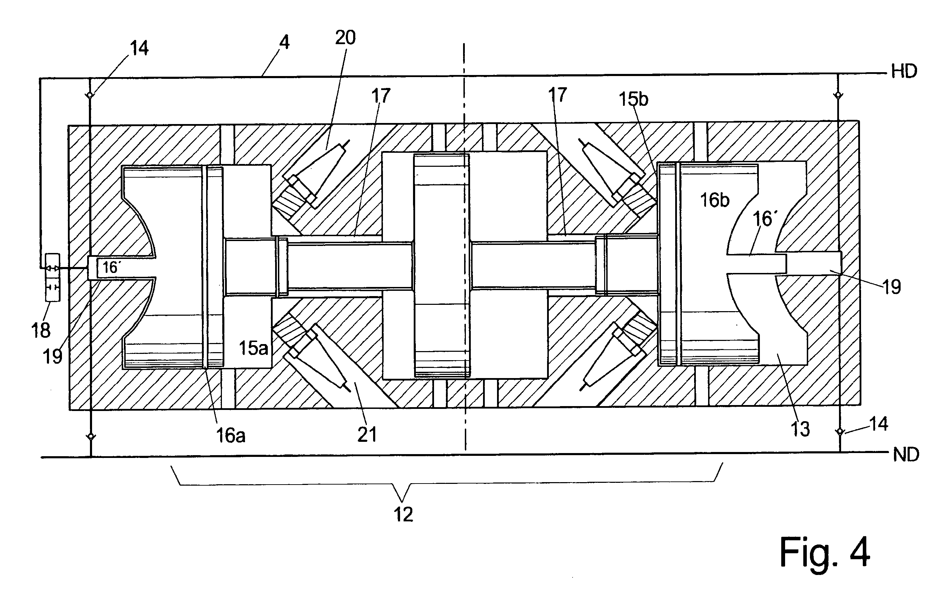

Das ändert sich, wenn gemäß Fig. 4 ein doppelt wirkender Freikolbenmotor, z. B. der Stelzermotor, mit einem Hydraulikteil, ähnlich wie beim einfachen Freikolbenmotor mit Hydraulikpumpe (Brennkammer auf einer Seite des Freikolbens, Ölverdichtungsraum auf der anderen Seite), komplettiert wird; Figur 4 zeigt eine Selbstzündervariante:
Dabei ist auf der Rückseite jedes der beiden Arbeitskolben 16a,b, also auf der von der jeweiligen Brennkammer 15a,b abgewandten Seite, der Zylinder ebenfalls geschlossen und bildet dort einen Arbeitsraum 19, der mit Hydrauliköl gefüllt ist, und in den der Kolben 16a,b oder ein gegenüber dem Durchmesser des Kolbens 16a,b verkleinerter Kolbenteil 16' gegenüber der Wandung des Arbeitsraums 19 abgedichtet eintaucht und das im Arbeitsraum 19 vorhandene Hydrauliköl, welches dort mit Niederdruck eingesaugt wurde, beim Eintauchen zunehmend auf Hochdruck verdichtet und in die Hochdruckleitung 4 auspresst, die mit dem Hochdruckspeicher 3 verbunden ist.

Pumpt der Kolben 16' an der einen Seite (hier links) Öl in den Hochdruckspeicher 3, saugt der Arbeitsraum 19 an der anderen Seite (rechts) Niederdrucköl an, wobei ein Rückschlagventil 14 im jeweiligen Zufuhrkanal einen Rückfluss verhindert und so die Verdichtung im rechten Brennraum 15b aufrecht hält, bis dort wieder eine Explosion stattfindet.

So lässt sich auch hier die Leistung durch Puls-Pause-Modulation steuern - jedoch nicht über den Start der Kompressionsbewegung, sondern über den Start der Expansionsbewegung, da ein Kolben 16b während der Pausen nicht am unteren, sondern am oberen Totpunkt festgehalten wird.

Der Kolben kann am oberen Totpunkt aber nicht lange festgehalten werden, da die verdichtete Luft zum Austreten entlang den Dichtungsflächen 17 zwischen Kolben 16a,b und Zylinderwand tendiert; die Pausen dürfen daher eine bestimmte Zeitgrenze nicht überschreiten. Wenn aber die Verdichtung zum Beispiel bis 40 ms haltbar ist, kann ein Motor z. B. mit maximaler Leistung von 2400 Hüben pro Minute, bis zu 975 Hüben pro Minute (16 Pulsen/sek) abwärts betrieben werden, ohne dass Verbrauch und Abgaswerte maßgeblich darunter leiden.

Wenn noch weniger Leistung benötigt wird, wechselt der Antrieb automatisch vom Hydraulik- zum Elektroantriebsmodus und schaltet der Freikolbenmotor ab, während nur der/die Elektromotoren das Fahrzeug antreiben. Wenn der Freikolbenmotor eine Minimalfrequenz erreicht hat, schaltet er sowie der Hydraulikantrieb ab und der Elektroantrieb übernimmt, bis der Ladestand der Batterie unter einen bestimmten Wert sinkt oder der Elektroantrieb nicht mehr ausreicht, worauf Freikolbenmotor und Hydraulikantrieb wieder übernehmen.

Manuell kann man immer zum Hydraulikantrieb wechseln.

Hektisches Hin- und Herschalten zwischen Hydraulikantrieb und Elektroantrieb wird vermieden, indem das Verhältnis Maximal: Minimal-Frequenz des Freikolbenmotors größer ist als das Leistungsverhältnis zwischen Hydraulik- und Elektroantrieb (z.B. 2400:720 Puls/m versus 30:10 kW).

Der Neustart erfolgt erst, wenn die Batterie 8 eine Aufladung braucht, also unter eine Mindestladung sinkt, oder mehr Leistung gefragt wird als der Elektroantrieb bieten kann. Dann wird Ventil 18 geöffnet und der eine Arbeitsraum 19 mit Hochdruck aus dem Hochdruckspeicher 3 oder der Hochdruckleitung 4 beaufschlagt, um die Verdichtung im dortigen Brennraum 15a wieder herzustellen.

Erwähnt wurde bereits, dass der Freikolbenmotor immer im oder nahe am Betriebs-Optimum arbeitet. Die Einspritzvariablen (Menge, Zeitpunkt, Druck, Verlauf) und - beim einfach wirkenden Freikolbenmotor - die Kompressionsvariablen (Druck, Weg) bleiben daher weitgehend verfügbar, um die Bewegungsabläufe für die unterschiedlichen Kraftstoffe zu optimieren - effektiv kombiniert mit Vorkehrungen, die schon in monovalenten Motoren der Optimierung der Betriebstemperatur dienlich wären, wie Kraftstoff-Vorheizung (beispielsweise durch ein keramisches Element in der Einspritzdüse 20) und bei Dieselmotoren Brennkammervorheizung (zum Beispiel durch Glühkerzen 21).

### DRUCKTRANSFORMATOR

Der Freikolbenmotor wird sekundär über seine Verbraucher geregelt. Weil der Verbraucher aber Hochdrucköl abnimmt, sobald der Freikolbenmotor es produziert, und dieser es produziert, sobald der Verbraucher es abnimmt, bedarf es zwischen diesen eines Drucktransformators, der Hochdrucköl mit Niederdrucköl vermischt, bis die benötigte Bedarfskombination von Druck und Volumenstrom erreicht ist:
Dabei glättet der Drucktransformator auch die pulsierende Ungleichförmigkeit der vom Freikolbenmotor abgegebenen Leistung. Es gibt mehrere Transformationskonzepte: Integriert im Freikolbenmotor (Fa. EPA, USA) oder im Radialkolbenmotor (Fa. Artemis, UK), separat als Axialkolbenmaschine (Fa. Innas, NL) oder als Radialkolbenmaschine.

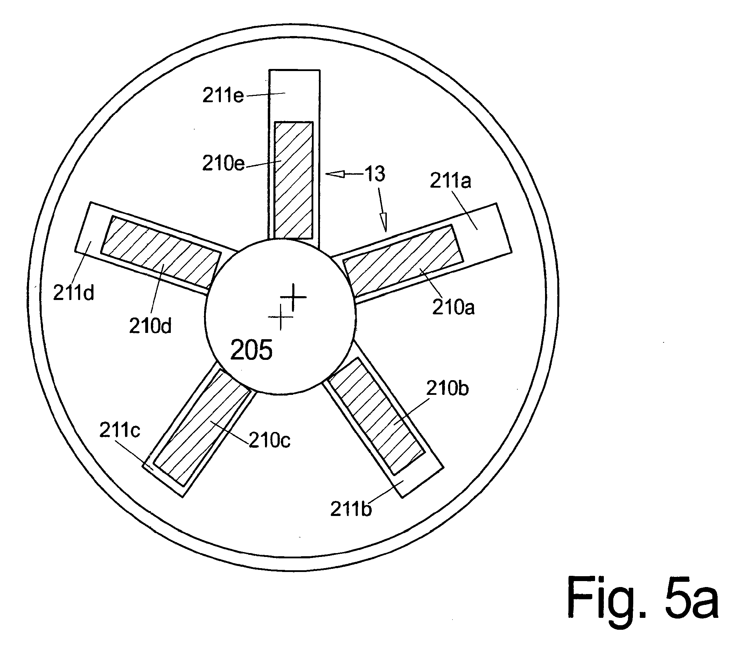

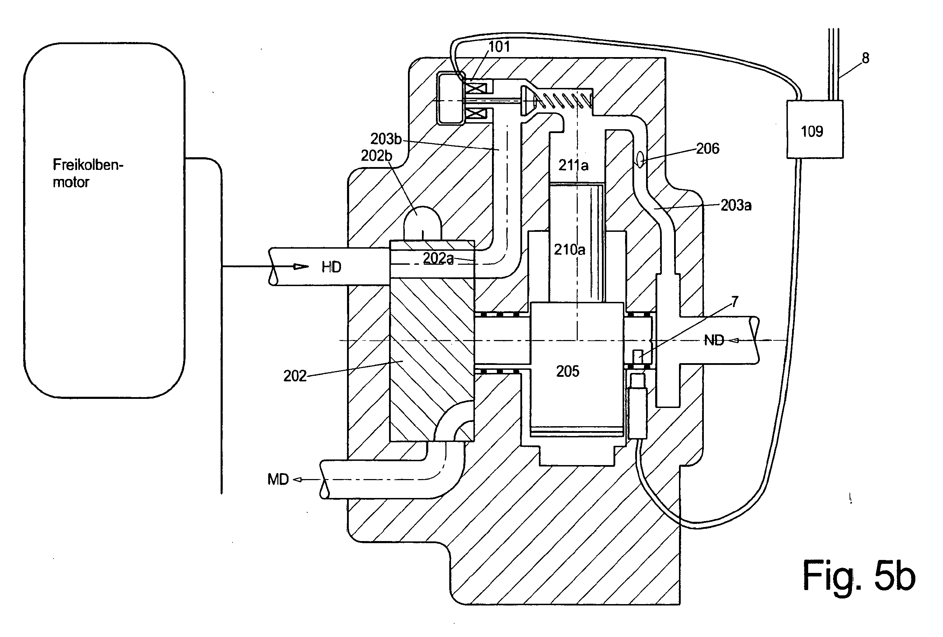

Figur 5 zeigt die Lösung als Radialkolbenmaschine gemäß z. B. der PCT/EP 2008/065200.

Sternförmig um einen drehbaren Excenter 205 - gemäß Figur 5a - herum sind Arbeitskolben 210 a bis e abdichtend in ihren Arbeitsräumen 211 a bis e radial beweglich angeordnet, die sich mit der inneren Stirnfläche am Excenter 205 abstützen und deren äußere Stirnfläche die radial innere Begrenzung des jeweiligen Arbeitsraumes darstellt.

Jeder Arbeitsraum - siehe Figur 5b - ist über Zuführleitungen sowohl mit dem Niederdruckanschluss C als auch mit einem Hochdruckanschluss A verbindbar und zusätzlich mit einem Mitteldruckauslass B.

Der Grundgedanke dieses Drucktransformators besteht darin, für das notwendige Verändern des Druckes des benötigten Hydrauliköls nicht wie üblich eine Abfolge von hydraulischem Motor und davon angetriebener hydraulischer Pumpe zu verwenden, die zunächst zuführte Energie in mechanische Energie verwandelt und wieder zurück, sondern direkt hydraulische Energie in Form eines hohen Druckniveaus in hydraulische Energie in Form eines niedriger liegenden, definierten Mitteldruckniveaus umzuwandeln.

Dies wird erzielt, indem während der Bewegung des Arbeitskolbens in Richtung Vergrößerung des Arbeitsraumes automatisch Niederdrucköl hineingezogen wird, wenn und solange der Zufluss des Hochdrucköls gesperrt wird, so dass am Ende des Expansionstaktes in den dann gefüllten Arbeitsraum der gewünschte Mitteldruck an Hydraulikmedium vorliegt.

Beim anschließenden Reduziertakt des Arbeitskolbens wird der Arbeitsraum mit dem Mitteldruckauslass verbunden und von dort an den damit verbundenen Verbraucher ausgestoßen.

Durch die mehreren sternförmigen Arbeitskolben werden dem Verbraucher ein quasi kontinuierlicher Strom an Hydraulikmedium mit mittlerem Druckniveau zur Verfügung gestellt und darüber hinaus die Excenterwelle in Bewegung gehalten, indem die in der Expansionsphase befindlichen und momentan mit dem Hochdruck in Verbindung stehenden Arbeitsräume ihren Arbeitskolben so gegen den Excenter pressen, dass dieser weitergedreht wird und die in der Reduzierungsphase befindlichen Arbeitsräume die notwendige mechanische Energie zum Ausstoßen des Hydraulikmediums in den Mitteldruckanschluss zuführt.

Über eine Steuerung kann beim Befüllen der Arbeitsräume der Zeitpunkt des Wechsels von Hochdruck auf Niederdruckzufluss gewählt und damit jedes gewünschte Mitteldruck-Niveau erzielt werden.

Die Radialkolbenmaschine ähnelt insbesondere einem Radialkolbenmotor mit außenseitiger Hochdruckölversorgung, verfügt aber anstelle der Abtriebswelle über einen dritten Anschluss zum Niederdrucköl, während der übliche Niederdruckanschluss den Verbraucher mit Mitteldruck-Öl bedient. Im Verbindungskanal jeder einzelner Zylinderkammer zum Hochdruck und alternierend zum Verbraucher gibt es ein einfaches ON/OFF-Ventil:
In der Verbindung zum Niederdrucköl befindet sich ein Rückschlagventil, das nur dessen Einstrom ermöglicht. Sobald das ON/OFF-Ventil schließt, öffnet sich das Rückschlagventil; und umgekehrt. Das ON/OFF-Ventil kann nur im unteren Totpunkt, also am Anfang der Einstromphase, schließen und muss sich dann spätestens im oberen Totpunkt, Anfang der Ausstromphase, wieder öffnen.

Wie lange welche ON/OFF-Ventile geschlossen sein sollen, um Hochdruck-Öl in Bedarfsdruck-Öl zu verwandeln (Drucksteuerung), und wie viel Hochdrucköl der Freikolbenmotor deshalb bereitstellen soll (Volumenstromsteuerung), bestimmt der Fahrer über das Gaspedal oder ein anderes Dosierungsinstrument. Die praktisch stufenlose Druckanpassung wird elektronisch geregelt; eine Sensorik ermittelt die exakten Positionen der Zylinder gegenüber dem drehenden Anschlussventil.

Beispiel: Wenn der Eingangsdruck von 450 auf 150 bar abgesunken ist, erhöht der Druck-Transformator ihn durch Abschaltung der Beimischung schlagartig wieder auf 450 bar und verlängert der Planetensatz gleichzeitig die Übersetzung um den Faktor 3. Beides neutralisiert sich gegenseitig, aber der Druck-Transformator kann den Druck nochmals auf 150 bar reduzieren. Wenn der Bedarfsdruck danach wieder zunimmt, erhöht der Druck-Transformator den Öldruck dementsprechend bis zu 450 bar. Nimmt der Bedarfsdruck noch weiter zu, reduziert der Druck-Transformator schlagartig auf 150 bar, während der Planeten-Satz seine Übersetzung um den Faktor 3 verkürzt, wodurch ein weiterer Anstieg des Bedarfdrucks ums Dreifache angeglichen werden kann. Konkret bedeutet dies, dass ein Auto mit max. Geschwindigkeit von 165 km/h schon bei 18 km/h, also mit drei Radumdrehungen per Sekunde - mit zwei Planetensätzen schon bei 6 km/h (1 U/s) - die maximale Hydraulikleistung auf die Räder bringen und diese Leistung bis 25 U/s durchhalten kann; automatisch, stufenlos und ohne den üblichen Lärm von Verstellmotoren.

Eine konkrete Bauform eines solchen Drucktransformators zeigt die Figur 5b:
Auf einem rotierenden Excenter 205 stützen sich mit ihrer inneren Stirnfläche mehrere über den Umfang verteilte radial abstrebende Arbeitskolben 210a - e ab, die jeweils in ihrem eigenen, radial ausgerichteten Zylinderraum 211 a bis e radial hin und her beweglich sind, abgestützt und zum Teil angetrieben vom zentralen Excenter 205, wie in Fig. 5a ersichtlich.

Mit ihrer äußeren Stirnseite begrenzen die Arbeitskolben 210 a bis e jeweils einen Arbeitsraum 211a, von denen jeder die in Fig. 5b im Schnitt durch einen dieser Arbeitskolben 210a ersichtlichen Details aufweist:
Einerseits eine Verbindung mit einem Niederdruckanschluss ND, des Weiteren eine Verbindung mit einem Hochdruckeinlass HD sowie zu einem Mittel-druckanschluss MD.

In der Verbindungsleitung 203a zwischen dem Niederdruckanschluss ND und dem Arbeitsraum 211 a ist ein Rückschlagventil 206 angeordnet. In der Verbindungsleitung 203b zum Arbeitsraum 211 a ist über ein Schaltventil 202a wahlweise der Hochdruckanschluss HD als Zufluss oder der Mitteldruckanschluss MD als Auslass aufschaltbar. Als Schaltventil 202 dient ein in drehfester Verbindung mit dem Excenter 205 angeordneter Ventilzylinder, in dem eine axiale Durchgangsleitung 202a zur Verbindung mit der Hochdruckleitung oder ein radial außen teilweise umlaufender Ringkanal 202b zur Verbindung mit dem radial außen ankommenden Mitteldruckanschluss MD dient.

In der Zufuhrleitung 203b für den Hochdruck oder Mitteldruck ist ferner ein Sperrventil 101 angeordnet, welches von einer Steuerung 109, in der Regel einer elektrischen oder elektronischen Steuerung, gesteuert wird, die mit dem an den Drucktransformator angeschlossenen Verbraucher, z. B. in diesem Fall dem Hydraulikmotor, verbunden ist.

Der Arbeitsraum 211 a wird beim neuen Befüllen durchgängig mit Niederdrucköl befüllt und mittels zeitlich begrenztem Öffnen des Sperrventils 101 mit Hochdruck, da in der Füllungsphase der Hochdruckanschluss an der Zufuhrleitung 203b anliegt.

Dadurch bildet sich im Arbeitsraum 211a eine Ölfüllung mit einem von der Steuerung 109 festgelegten mittleren Druck, die den Arbeitskolben 210a gegen den Excenter 205 presst und diesen weiterdreht, bis mittels dieser und analoger Einwirkungen der anderen Arbeitskolben 210b bis e durch Drehung des Ventilzylinders 202 die Zufuhrleitung 203b mit dem Mitteldruckanschluss in Verbindung steht und das im Arbeitsraum 211a befindliche Mitteldrucköl in den Mitteldruckanschluss ausgepresst wird, bewirkt durch die radiale Bewegung des Arbeitskolbens 210a nach außen durch den Excenter 205.

Das Sperrventil 101 ist so ausgebildet, dass ein Ausströmen aus dem Arbeitsraum 211 a jederzeit möglich ist, da das Sperrventil 101 als Kegelsitzventil ausgebildet ist, welches nur den Einlauf in den Arbeitsraum 211a unterbrechen kann.

### PLANETENGETRIEBE

Theoretisch lässt sich der Hochdruck quasi stufenlos bis zum Niederdruck transformieren. Entsprechend vergrößert sich jedoch der Volumenstrom.

Dadurch begrenzt, was sich an Volumenstrom noch praktikabel bewältigen lässt, ist der Druck-Transformationsbereich meistens geringer als die Drehmomentspreizung eines traditionellen Hydraulikantriebs aus Verstellpumpe und Motor, oder als der Spreizungsbereich mechanischer Getriebe.

Mit dem Druck-Transformator allein wäre der Hydraulikantrieb im Vergleich der Systeme also im Nachteil. Deshalb wird dem Drucktransformator vorzugsweise ein Planetengetriebe z. B. gemäß DE 2007 016517 nachgeschaltet:
Dabei ist bei einem rotierenden Drucktransformator z. B. die Abtriebswelle des hydraulischen Motors drehfest mit dem Sonnenrad des Planetengetriebes verbunden, wobei dessen Steg als Abtriebswelle des rotierenden Drucktransformators fungiert. Eine andere Möglichkeit besteht darin, dass der Planetenträger des Planetengetriebes mit der Abtriebswelle des Hydraulikmotors drehfest verbunden ist und das Sonnenrad des Planetengetriebes als Abtriebswelle des Drucktransformators fungiert.

Der Druck-Transformator kann nämlich in kürzester Zeit, und daher praktisch synchron mit einer gleichgroßen, aber inversen Drehzahländerung durch das Planetengetriebe, Hochdruck in Niederdruck transformieren (oder umgekehrt), ohne dass sich Eingangsleistung (Hochdruck x Volumenstrom) und Ausgangsleistung (Raddrehzahl x Drehmoment) ändern, womit sich der Druck-Transformationsbereich mit dem Übersetzungsbereich des mechanischen Planetengetriebes zu einem Gesamt-Übersetzungsbereich ungeheuerer Größe multipliziert:

| | | |
|---|---|---|
| Freikolbenmotor | 25 kW | 40 kW |
| Druck-Transformation praktikabel bis | 200 l/m | 200 l/m |
| Druck-Transformation von 450 bis | 75 bar | 120 bar |
| Faktor | 5,6 | 3,5 |
| 1. Planetensatzfaktor | 5 | 3 |
| 2. Planetensatzfaktor | - | 3 |
| Gesamt-Übersetzungsbereich | 1:28 | 1:31,5 |

### HYDROKONSTANTMOTOR

Zwischen Transformator und Planetengetriebe befindet sich ein hydraulisch angetriebener Motor, insbesondere ein Hydrokonstantmotor. Darunter versteht man einen Hydraulikmotor mit konstantem Verdrängungsvolumen.

Eine Bauform des Axialkolbenmotors eignet sich besonders für den Antrieb einer ganzen Achse wie in Fig. 1. Die Drehzahl wird vom Differentialgetriebe reduziert auf Raddrehzahlen, welche den Geschwindigkeitsanforderungen moderner Fahrzeuge entsprechen; das Raddrehmoment passt sich, wie oben erläutert, dem Bedarf an.

Ein Radialkolbenmotor eignet sich eher zum Einzelradantrieb im Rahmen einer hydraulischen Differentiallösung, wie in Figur 2 gezeigt. Die Motordrehzahl wird bis zur erforderlichen Raddrehzahl erhöht. Die Drehmomentspreizung muss meistens jedoch geringer als bei der Axialkolbenvariante sein, da der Motor sonst zu schwer wird.

Im Übrigen ist der vorgeschlagene Hydraulikantrieb aus konstruktiver Sicht relativ einfach zu realisieren - auch deswegen, weil er für die Zufuhr von Niederdrucköl zum Schiebebetrieb und Bremsen keine spezifische Vorkehrung benötigt und sich sogar der Drehrichtungsumkehr erübrigt, wenn man die Rückwärtsfahrt dem Elektroantrieb überlässt.

### WIEDERVERWENDUNG BREMSENERGIE

Herkömmliche hydraulische Antriebe können sehr schnell sehr viel Bremsenergie aufnehmen, aber geben diese ebenso schnell wieder ab; es fehlt eine Dosierungsmöglichkeit bei der Abgabe. Eine herkömmliche elektrische Batterie kann vor allem bei heftigem Bremsen nur wenig von der kinetischen Energie in elektrische Energie umwandeln; das meiste geht verloren.

Der erfindungsgemäße Antrieb nun kann alle aus Bremsen und Schiebetrieb verfügbare kinetische Energie über eine Hydraulikleitung 22 mit Rückschlagventil 24 im Hochdruckspeicher 3 oder in einem separaten Bremsenergiespeicher aufnehmen und über den dosierenden Druck-Transformator wiederverwenden, ungeachtet ob sie beim hydraulischen oder elektrischen Fahren erzeugt wird.

Letzteres impliziert allerdings, dass der Elektromotor beim Bremsen in Freilauf schaltet und der Hydraulikmotor, von Niederdrucköl durchströmt, das Bremsen übernimmt. Dazu ist nicht nötig, dass der Hydraulikmotor permanent mitläuft; es genügt, wenn das Planetengetriebe während des Elektroantriebs generell im Freilauf-Position steht und lediglich zum Bremsen aktiviert wird, insbesondere in eine kurze Übersetzung schaltet.

Zur Aufnahme der Bremsenergie braucht der Hochdruckspeicher 3 zusätzliche Kapazität, die sich erschließt (Ventil 24), wenn der vom Hydraulikmotor 9 beim Bremsen gelieferte Hochdruck über den Mindest-Druck hinaus steigt, dessen Unterschreitung einen neuen Arbeitshub des Freikolbenmotors 1 auslöst. Bei Nutzung dieser Energie wird der Druck im Hochdruckspeicher 3 wieder auf diesen Mindest-Druck herabsinken, ohne dass der Freikolbenmotor 1 aktiviert wird. Der zunehmende Gegendruck bei abnehmender Bremsenergie fungiert als Hydraulikbremse.

Lediglich bei sanftem Bremsen im elektrischen Fahrbetrieb wird der elektrische Motor 10 zum Generator und die erzeugte elektrische Energie in der Batterie 8 gespeichert.

### BEZUGSZEICHENLISTE

- 1: Freikolbenverbrennungsmotor
- 2: Niederdruckleitung
- 3: Hochdruckspeicher
- 4: Hochdruckleitung
- 5: Drucktransformator
- 6: Generator
- 7: ON/OFF-Ventil
- 8: Batterie
- 9: Hydraulikmotor
- 10: Elektromotor
- 11: Planetengetriebe
- 12: Verbrennungsteil
- 14: Rückschlagventil
- 15a, b: Brennkammer
- 16a, b: Arbeitskolben
- 17: Dichtungsfläche
- 18: Ventil
- 19: Arbeitsraum
- 20: Einspritzdüse
- 21: Glühkerze
- 22: Hydraulikleitung
- 24: Rückschlagventil
- HD: Hochdruck
- ND: Niederdruck
- FKM: Freikolbenverbrennungsmotor
- H-Antrieb: Hydraulikantrieb
- E-Antrieb: Elektroantrieb

## Patentansprüche

1. Elektro-hydraulischer Kraftfahrzeug-Antrieb mit
- einem Freikolbenverbrennungsmotor (1) mit Hydraulikpumpe, der chemische Energie aus einem Kraftstoff in hydraulische Energie umwandelt und diese in Form von Hydraulik-Öl unter Hochdruck (HD) in einem Hochdruckspeicher (3) speichert,
- einem Niederdruckspeicher (ND) für Hydrauliköl,
- einem hydraulischen Fahrantrieb, der wenigstens einen Hydraulikmotor (9), insbesondere einen Hydraulikmotor (9) mit konstantem Fördervolumen umfasst und ggf. ein nachgeschaltetes mechanisches Getriebe, insbesondere ein Planetengetriebe (11), wobei
- der Hochdruckauslass des hydraulisch angetriebenen Motors mit dem Hochdruckspeicher (3) über eine Hydraulikleitung (22) mit einem Rückschlagventil (24) verbunden ist,
**gekennzeichnet, durch**
- einen elektrischen Fahrantrieb, der wenigstens einen Elektromotor (10) und eine damit elektrisch verbundene Batterie (8) aufweist, wobei
- der elektrische Antrieb einen Hydraulikmotor und einen diesem nachgeschalteten elektrischen Generator (6) umfasst, der mit der Batterie (8) elektrisch verbunden ist,
- einen Drucktransformator (5), der Einlässe für Hochdruck-Öl und Niederdruck-Öl sowie einen Auslass für daraus gemischtes Mitteldruck-Öl aufweist und den Hydraulikmotor (9) mit Hydrauliköl unter Mitteldruck versorgt, wobei
- sowohl die Hydraulikpumpe des Freikolbenmotors als auch der Drucktransformator (5) und der hydraulisch angetriebene Motor des elektrischen Antriebes sowohl mit der Hochdruckleitung (4) als auch der Niederdruckleitung (2) für Hydrauliköl in Verbindung stehen.

2. Antrieb nach Anspruch 1,
**dadurch gekennzeichnet, dass**
der hydraulische Fahrantrieb eine Steuerung, insbesondere eine elektrische oder elektronische Steuerung, umfasst, die abhängig vom Leistungsbedarf des Hydraulikmotors (9) den am Auslass für Mitteldrucköl des Drucktransformators (5) zur Verfügung stehenden Druck geregelt durch Regelung des Mischprozesses im Drucktransformator (5).

3. Antrieb nach einem der vorhergehenden Ansprüche,
**dadurch gekennzeichnet, dass**
der hydraulisch angetriebene Motor des elektrischen Antriebes über ein Ventil (18), insbesondere ein ON/OFF-Ventil (7) mit der Hochdruckleitung (4) verbindbar ist.

4. Antrieb nach einem der vorhergehenden Ansprüche,
**dadurch gekennzeichnet, dass**
der Generator (6) des elektrischen Antriebes identisch mit dem Elektromotor (10) des elektrischen Antriebes ist und insbesondere der elektrische Antrieb eine ganze Achse mit mindestens zwei Rädern antreibt.

5. Antrieb nach einem der vorhergehenden Ansprüche,
**dadurch gekennzeichnet, dass**
der Freikolbenverbrennungsmotor (1) ein Stelzermotor mit zusätzlicher Hydraulikpumpe, insbesondere nach dem Zweitaktverfahren oder dem Selbstzünderverfahren, ist.

6. Antrieb nach einem der vorhergehenden Ansprüche,
**dadurch gekennzeichnet, dass**
der Drucktransformator (5) eine Radialkolbenmaschine ist und jeder Arbeitsraum (211 a bis e) sowohl einen gesteuerten HD - als auch einen ND-Anschluss aufweist als auch einen gesteuerten Mitteldruckauslass.

7. Antrieb nach einem der vorhergehenden Ansprüche,
**dadurch gekennzeichnet, dass**
der hydraulische Motor ein Axialkolbenmotor ist mit konstantem Verdrängungsvolumen.

8. Verfahren zum Betreiben eines Kraftfahrzeug-Antriebes nach einem der vorhergehenden Ansprüche,
**wobei**
a) der Freikolbenverbrennungsmotor (1) nur in Gang gesetzt wird, wenn der Druck im Hochdruckspeicher (3) unter einen Mindestdruck sinkt, wobei die Leistung des Freikolbenverbrennungsmotors (1) gesteuert wird über die Dauer der Pausen zwischen den Aktivierungsphasen, insbesondere den einzelnen Arbeitshüben, des Freikolbenverbrennungsmotors (1),
b) ein minimales Leistungsangebot des Freikolbenmotors festgelegt wird durch die maximale Dauer der Pausen,
c) bei einem aktuellen Leistungsbedarf des hydraulischen Antriebes, der unter dem minimalen Leistungsangebot des Freikolbenmotors liegt, Überschuss-Leistung des Freikolbenmotors in Form von Hochdrucköl vom elektrischen Antrieb zum Erzeugen von elektrischer Energie und deren Speicherung in einer elektrischen Batterie (8) verwendet wird, solange ihrer Ladezustand dies ermöglicht.
d) bei einem aktuellen Leistungsbedarf des hydraulischen Antriebes, der zwischen dem maximalen und dem minimalen Leistungsangebot des Freikolbenmotors liegt, während die Batterie (8) vollgeladen ist, zwischen den einzelnen Arbeitshuben Pausen eingelegt werden, derer Dauer sich nach dem Leistungsbedarf des hydraulischen Antriebes richtet.
e) bei einem aktuellen Leistungsbedarf des Kraftfahrzeugantriebes, der unter dem des hydraulischen Antriebes liegt, wenn dieser mit dem minimalen Leistungsangebot des Freikolbenmotors versorgt wird, und gleichzeitig die elektrische Batterie (8) einen Ladezustand oberhalb eines vorgegebenen oberen Schwellwertes aufweist, wird der Freikolbenmotor und der hydraulische Antrieb stillgesetzt und der elektrische Antrieb übernimmt den Kraftfahrzeugantrieb,
f) bei einem aktuellen Leistungsbedarf des Kraftfahrzeugantriebes, der oberhalb des hydraulischen Antriebes liegt, wenn dieser vom Freikolbenverbrennungsmotor (1), der mit Höchstleistung läuft, versorgt wird, zusätzlich der elektrische Antrieb zugeschaltet wird, der von elektrischer Energie aus der Batterie (8) versorgt wird.

9. Verfahren nach Anspruch 8,
**dadurch gekennzeichnet, dass**
der hydraulische Antrieb mit Energie in Form von Hochdrucköl versorgt wird über einen Drucktransformator (5), der dem Hochdrucköl soviel Niederdrucköl beimischt, dass der aktuelle Bedarf an Druck und Volumenstrom des hydraulischen Motors gedeckt ist, wobei der Drucktransformator (5) das Hochdrucköl von dem laufenden Freikolbenverbrennungsmotor (1) erhält und im Falle dessen Stillstandes aus dem Hochdruckspeicher (3).

10. Verfahren nach einem der vorhergehenden Verfahrensansprüche,
**dadurch gekennzeichnet, dass**
das Planetengetriebe (11) auf Freilauf geschaltet ist, wenn von hydraulischem Fahrantrieb auf elektrischen Fahrantrieb automatisch umgeschaltet wird.

11. Verfahren nach einem der vorhergehenden Verfahrensansprüche,
**dadurch gekennzeichnet, dass**
zum Rückgewinnen von Bremsenergie
- bei leichtem Bremsen bis zu einer vorgegebenen Stellung des Bremspedals der Elektromotor (10) des elektrischen Fahrantriebs als Generator (6) verwendet wird und die erzeugte elektrische Energie in die Batterie (8) einspeist,
- bei stärkerem Bremsen über die vorgegebene Stellung des Bremspedals hinaus der Hydraulikmotor (9) des hydraulischen Fahrantriebes die Bremsenergie in hydraulische Energie in Form von Hochdrucköl umwandelt und in dem Hochdruckspeicher (3) oder einen separaten Bremsenergie-Speicher einspeichert und dabei insbesondere das Planetengetriebe (11) auf eine niedrigere Übersetzungsstufe geschaltet ist.

## Claims

1. Electro-hydraulic automobile drive with
- a free-piston combustion engine (1) with hydraulic pump that converts chemical energy from a fuel into hydraulic energy and stores it in the form of hydraulic oil under high-pressure (HD) in a high-pressure storage (3),
- a low-pressure storage (ND) for hydraulic oil,
- a hydraulic drive, which is at least consisting of a hydraulic engine (9), particularly a hydraulic engine (9) with constant flow volume and possibly a downstream mechanical gear, particularly a planetary gear (11), wherein
- the high-pressure outlet of the hydraulically driven engine is connected to the high-pressure storage via a hydraulic line (22) with a non-return valve (24),
**Characterised by**
- an electric drive that at least features an electric engine (10) and a battery (8) connected to it, wherein the electric drive comprises a hydraulic engine (9) and a downstream electric generator (6), which is electrically connected to the battery (8),
- a pressure transformer (5), which features inlets for high-pressure oil and low-pressure oil as well as an outlet for medium-pressure oil mixed out of that, and which supplies the hydraulic engine (9) with hydraulic oil under medium-pressure, wherein
- both the hydraulic pump of the free-piston engine and the pressure transformer (5) and the hydraulically driven engine of the electric drive as well as the high-pressure line (4) as well as the low-pressure line (2) for hydraulic oil are connected.

2. Drive according to claim 1,
**Characterised in that**
The hydraulic drive con controls, particularly electrical or electronical controls, which regulate the pressure available at the outlet for medium-pressure oil of the pressure transformer (5) depending on the power requirement of the hydraulic engine (9) by regulating the mixing process in the pressure transformer (5).

3. Drive according to one of the previous claims,
**Characterised in that**
The hydraulically driven engine of the electric drive can be connected to the high-pressure line (4) via a valve (18), particularly an ON / OFF valve (7).

4. Drive according to one of the previous claims,
**Characterised in that**
The generator (6) of the electric drive is identical to the electric engine (10) of the electric drive and the electric drive in particular drives an entire axle with at least two wheels.

5. Drive according to one of the previous claims,
**Characterised in that**
The free-piston combustion engine (1) is a Stelzer engine with additional hydraulic pump, particularly according to the two-stroke method or the compression-ignition method.

6. Drive according to one of the previous claims,
**Characterised in that**
The pressure transformer (6) is a radial-piston engine and every workroom (211a to e) features a controlled HP - and a LP connection as well as a controlled medium-pressure outlet.

7. Drive according to one of the previous claims,
**Characterised in that**
The hydraulic engine is an axial piston engine with constant displacement volume.

8. Method for operating an automobile drive according to one of the previous claims, wherein
a) the free-piston combustion engine (1) is only activated, if the pressure in the high-pressure storage (3) falls below the minimum pressure, wherein the performance of the free-piston combustion engine (1) is controlled via the duration of pauses between the activation phases, particularly the individual working strokes of the free-piston combustion engine (1),
b) a minimum performance supply of the free-piston combustion engine (1) is determined by the maximum duration of pauses,
c) the current power requirement of the hydraulic drive that lies below the minimum performance supply of the free-piston engine, excess performance of the free-piston engine in the form of high-pressure oil from the electric drive is used for generating electric energy and storing it in an electric battery (8), as long as the charging condition makes this possible,
d) for the current power requirement of the hydraulic drive that lies between the maximum and minimum performance supply of the free-piston engine, while the battery (8) is fully charged and pauses are made between the individual working strokes, whose duration is determined by the power requirement of the hydraulic drive,
e) for the current power requirement of the automobile drive that lies below the one of the hydraulic drive, if it is supplied with the minimum performance supply of the free-piston engine, and if the electric battery (8) features a charging level above a pre-determined upper threshold value at the same time, the free-piston engine and the hydraulic drive are shut down and the electric drive takes over the automobile drive,
f) for the current power requirement of the automobile drive that lies above the one of the hydraulic drive, if it is supplied by the free-piston combustion engine (1), which runs at maximum capacity, and the electric drive is additionally engaged, which is supplied with electric energy from the battery (8).

9. Proceeding according to claim 8,
**Characterised in that**
The hydraulic drive is supplied with energy in the form of high-pressure oil by a pressure transformer (5) that admixes as much low-pressure oil to the high-pressure oil that the current demand of pressure and volume flow of the hydraulic engine is covered, wherein the pressure transformer (5) retains the high-pressure oil from the running free-piston combustion engine (1), and in case the engine is in downtime, from the high-pressure storage (3).

10. Proceeding according to one of the previous proceeding claims,
**Characterised in that**
The planetary gear (11) is switched to free wheel if you automatically switch from hydraulic drive to electric drive.

11. Proceeding according to one of the previous proceeding claims,
**Characterised in that**
For recovery of braking energy
- for light brake pressure up to a pre-determined position of the electric engine (10) brake pedal the electric drive is used as generator (6) and the generated electric energy is fed into the battery (8),
- for stronger braking pressure beyond the pre-determined position of the brake pedal the hydraulic engine (9) of the hydraulic drive converts the braking energy into hydraulic energy in the form of high-pressure oil and stores it in the high-pressure storage (3) or a separate braking energy storage and the planetary gear (11) is switched to a lower transmission level at that.

## Revendications

1. Groupe motopropulseur électrohydraulique avec :
- Un moteur à pistons libres (1) avec pompe hydraulique qui transforme l'énergie chimique du carburant en énergie hydraulique, puis l'emmagasine dans un accumulateur haute pression (3) sous la forme d'huile hydraulique sous haute pression (HD).
- Un accumulateur basse pression (ND) pour l'huile hydraulique,
- Un groupe motopropulseur hydraulique comprenant au moins un moteur hydraulique (9), plus particulièrement un moteur hydraulique (9) avec volume de refoulement constant et, le cas échéant, un engrenage mécanique connecté en aval, plus particulièrement un engrenage planétaire (11),
- La sortie haute pression du moteur à entraînement hydraulique étant reliée avec l'accumulateur haute pression (3) par une conduite hydraulique (22) dotée d'un clapet de retenue,
**Caractérisé par**
- Un groupe motopropulseur électrique qui présente un moins un moteur électrique (10) relié électriquement à une batterie (8), le groupe motopropulseur électrique comprenant un moteur hydraulique et un générateur électrique (6) connecté en aval et relié électriquement à la batterie (8),
- Un convertisseur de pression (5) qui présente des entrées d'admission pour l'huile sous haute pression et l'huile sous basse pression ainsi qu'une sortie pour le mélange d'huile sous pression moyenne qui en résulte; et approvisionne le moteur hydraulique (9) en huile hydraulique sous pression moyenne,
- La pompe hydraulique du moteur à pistons libres, le convertisseur de pression (5) et le moteur à entraînement hydraulique du groupe motopropulseur hydraulique étant reliés autant avec la conduite sous haute pression (4) que la conduite sous basse pression (2) pour l'huile hydraulique.

2. Groupe motopropulseur selon la revendication 1,
**caractérisé en ce que**
le groupe motopropulseur hydraulique comprend une commande, plus particulièrement une commande électrique ou électronique, qui, en fonction de la puissance requise par le moteur hydraulique (9), contrôle la pression disponible à la sortie d'huile sous pression moyenne du convertisseur de pression (5) en contrôlant le processus de mélange du convertisseur de pression (5).

3. Groupe motopropulseur selon l'une des revendications précédentes,
**caractérisé en ce que**
le moteur à entraînement hydraulique du groupe motopropulseur électrique peut être relié à la conduite sous haute pression (4) au moyen d'un clapet (18), plus particulièrement un clapet ON/OFF (7).

4. Groupe motopropulseur selon l'une des revendications précédentes,
**caractérisé en ce que**
le générateur (6) du groupe motopropulseur électrique est identique au moteur électrique (10) du groupe motopropulseur électrique et, particulièrement le groupe motopropulseur électrique, entraîne un arbre complet avec au moins 2 roues.

5. Groupe motopropulseur selon l'une des revendications précédentes,
**caractérisé en ce que**
le moteur à pistons libres (1) est un moteur Stelzer avec pompe hydraulique supplémentaire, particulièrement après le processus à deux temps ou le processus d'auto-allumage.

6. Groupe motopropulseur selon l'une des revendications précédentes,
**caractérisé en ce que**
le convertisseur de pression (5) est une machine à pistons radiaux et chaque espace de travail (211a à e) dispose d'une connexion à HP et d'une à BP commandées, ainsi qu'une sortie sous pression moyenne commandée.

7. Groupe motopropulseur selon l'une des revendications précédentes,
**caractérisé en ce que**
le moteur hydraulique est un moteur à pistons axiaux avec volume de substitution constant.

8. Procédé d'opération d'un groupe motopropulseur selon l'une des revendications précédentes,
Pour lequel
a) Le moteur à pistons libres (1) n'est mis en marche que lorsque la pression dans l'accumulateur HP (3) descend sous un niveau minimal, la puissance du moteur à pistons libres (1) étant commandée en fonction de la durée des pauses entre les phases d'activation, particulièrement les courses de travail individuelles, du moteur à pistons libres (1),
b) Une puissance minimale disponible du moteur à pistons libres est déterminée par la durée maximale des pauses,
c) Si le besoin actuel en puissance du groupe motopropulseur hydraulique est inférieur à la puissance minimale disponible du moteur à pistons libres, la puissance excédentaire du moteur à pistons libres est utilisée sous la forme d'huile HP du groupe motopropulseur électrique afin de produire de l'énergie électrique et de la stocker dans la batterie électrique (8) tant et aussi longtemps que son état de charge le permet,
d) Si le besoin actuel en puissance du groupe motopropulseur hydraulique se situe entre la puissance maximale et minimale disponible du moteur à pistons libres alors que la batterie (8) est chargée à pleine capacité et qu'entre les courses de travail individuelles sont insérées des pauses dont la durée est déterminée par le besoin en puissance du motopropulseur hydraulique,
e) Si le besoin actuel en puissance du groupe motopropulseur est inférieur à celui du groupe motopropulseur hydraulique lorsque ce dernier est alimenté avec la puissance minimale disponible du moteur à pistons libres et que la batterie électrique (8) présente simultanément un état de charge supérieur à une valeur seuil prédéterminée, le moteur à pistons et le groupe motopropulseur hydraulique sont mis à l'arrêt et l'entraînement hydraulique prend le relais du groupe motopropulseur,
f) Si le besoin actuel en puissance du groupe motopropulseur est supérieur à celui du groupe motopropulseur hydraulique lorsque ce dernier est alimenté par le moteur à pistons libres (1) fonctionnant à capacité élevée et que, simultanément, est activé l'entraînement électrique alimenté par l'énergie électrique de la batterie (8).

9. Procédé selon la revendication 8,
**caractérisé en ce que**
l'entraînement hydraulique est alimenté par de l'énergie sous la forme d'huile haute pression par un convertisseur de pression (5) qui ajoute à l'huile haute pression assez d'huile basse pression pour satisfaire au besoin actuel en pression et en débit volumique du moteur hydraulique, le convertisseur de pression (5) recevant l'huile haute pression en provenance du moteur à pistons libres (1) ou, si ce dernier ne fonctionne pas, de l'accumulateur haute pression (3).

10. Procédé selon l'une des revendications précédentes,
**caractérisé en ce que**
l'engrenage planétaire (11) passe en roue libre en cas de basculage automatique du groupe motopropulseur hydraulique au groupe motopropulseur électrique.

11. Procédé selon l'une des revendications précédentes
**caractérisé en ce que**
pour la récupération de l'énergie de freinage
- En cas de freinage léger jusqu'à une position prédéterminée de la pédale de frein, le moteur électrique (10) du groupe motopropulseur électrique est utilisé comme générateur (6) et l'énergie électrique produite est accumulée dans la batterie (8),
- En cas de freinage en force dépassant la position prédéterminée de la pédale de frein, le moteur hydraulique (9) du groupe motopropulseur hydraulique convertit l'énergie de freinage en énergie hydraulique sous la forme d'huile HP, puis l'emmagasine dans l'accumulateur haute pression (3) ou dans un accumulateur d'énergie de freinage séparé, l'engrenage planétaire (11) basculant alors particulièrement à un niveau de transmission inférieur.
